# EUROPEAN PATENT APPLICATION

(11) **EP 3 406 552 A1**
(43) Date of publication of application: **28.11.2018**
(21) Application number: 16886639.0
(22) Date of filing: 22.11.2016
(51) Int. Cl.: B65H 37/04, G02F 1/13

(54) **PROTECTIVE FILM ATTACHING INSTRUMENT**

(30) Priority: 21.01.2016 KR 20160007770; 11.07.2016 JP 2016136803; 30.08.2016 CN 201610753966
(71) Applicant: Crayon International, Seoul 01607 (KR)
(72) Inventor: KIM, Mee Yeon, Seoul 01860 (KR)
(74) Representative: Dr. Weitzel & Partner
(86) International application number: PCT/KR2016/013446
(87) International publication number: WO 2017/126796

(57) **Abstract**

The invention relate to a protective film attaching apparatus for attaching a protective film to a display area of a portable electronic apparatus.

A protective film attaching apparatus includes a case configured to receive a rear surface of a portable electronic apparatus, a cover configured to receive a front surface of the portable electronic apparatus and formed at a side of the case configured to rotate for opening or closing the case, and a film member provided in the cover configured to be attached on a front display area of the portable electronic apparatus.

## Description

### Technical Field

Exemplary embodiments of the invention relate to a protective film attaching apparatus for attaching a protective film to a display area of a portable electronic apparatus.

### Background Art

A protective film is used to protect a display panel of a portable electronic apparatus such as a mobile phone or tablet PC from damage or scratch.

Recently, as user interface with a touch screen has been widely used for the smart phone or the tablet PC, it is easy to damage or scratch to the display panel, so that necessary of the protective film is increased.

However, it is hard to apply the protective film to the display panel of the portable electronic apparatus without a defect such as a bubble. The protective film which is not properly attached on the display panel may cause degradation of visibility of the display panel, and may disturb touch operation of a user. In addition, rework of attaching the protective film to correct the defect may decrease visibility of the display panel and adhesion of the protective film due to contamination of the protective film.

Contrary, if the protective film is not attached to the portable electronic apparatus difficulty of the attachment, there is a problem about weakness of durability of the display panel of the display apparatus such as the smart phone or the tablet PC.

### Disclosure of the Invention

### Technical Problem

One or more exemplary embodiment of the invention provides a protective film attaching apparatus capable of easy attachment of a protective film to a display area of a portable electronic apparatus.

### Solution to Problem

According to an exemplary embodiment of the invention, a protective film attaching apparatus includes a case having a first receiving groove configured to receive a rear surface of a portable electronic apparatus, a cover having a second receiving groove configured to receive a front surface of the portable electronic apparatus, and formed at a side of the case configured to rotate for opening or closing the case, the second receiving groove being corresponding to the fist receiving groove, and a film member provided in the second receiving groove.

In an exemplary embodiment, the protective film attaching apparatus may further include a folding line which is formed from the first extending groove to the second extending groove through the second receiving groove.

In an exemplary embodiment, the cover has a first extending groove formed from an upper edge of the cover to an upper portion of the second receiving groove, and a second extending groove formed from a lower edge of the cover to a lower portion of the second receiving groove.

In an exemplary embodiment, a through hole may be formed through a bottom surface of the second receiving groove, a pair of adhesive tape to support the film member may be attached on the both side of the through hole, respectively.

In an exemplary embodiment, the cover may include a stepped portion formed at both side of the through hole in a width direction. Boundary of the film member may be received in the second receiving groove with spaced apart from the stepped portion by a predetermined gap.

In an exemplary embodiment, the film member may include a protective film and a first release paper attached on a front surface of the protective film. The first release paper may be removed from the protective film when the adhesive tape is removed.

In an exemplary embodiment, he protective film attaching apparatus may further include an incision portion having predetermined width and length from an upper edge of the cover to the second receiving groove configured to expose an upper portion of the film member when the case is combined with the cover.

In an exemplary embodiment, the film member may include a protective film received in the second receiving groove, a first release paper attached on a front surface of the protective film, and a second release paper attached on a rear surface of the protective film.

In an exemplary embodiment, the film member may include a first grip tape attached on an upper side portion of the first release paper and a second grip tape attached on an upper side portion of the second release paper. The first grip tape may be protruded from the first release paper, the second grip tape is protruded from the second release paper.

In an exemplary embodiment, a grip tape receiving groove may be formed at an upper portion of the second receiving groove to receive the second grip tape.

In an exemplary embodiment, the protective film attaching apparatus may further include at least one or more of guide protrusion and guide groove for guiding a combination direction. The guide protrusion and guide groove may be formed at facing surfaces of the case and the cover, respectively.

According to an exemplary embodiment of the invention, a protective film attaching apparatus includes a case having a receiving groove configured to receive a rear surface of a portable electronic apparatus, a cover having a through hole corresponding to the receiving groove, and formed at a side of the case configured to rotate for opening or closing the case, and a film member facing the front surface of the portable electronic apparatus through the through hole. A boundary of the film member is attached along a boundary of the through hole.

In an exemplary embodiment, the protective film attaching apparatus may further include a stepped portion formed along the boundary of the through hole on a front surface of the cover. The film member is attached along the stepped portion.

In an exemplary embodiment, the film member may include a first release paper, a protective film attached on a surface of the first release paper, and a second release paper attached on a surface of the protective film. A boundary of the first release paper may be attached along the along the stepped portion.

According to the exemplary embodiments of the present invention, a protective film attaching apparatus includes a case having a first receiving groove configured to receive a rear surface of a portable electronic apparatus, a cover formed at a side of the case configured to rotate for opening or closing the case, and a film member provided at the cover configured to face the portable electronic apparatus. The case has a protrusion part formed inner side of the case, and the first receiving groove is depressed on the protrusion part.

In an exemplary embodiment, the protrusion part may include a first protrusion part and a second protrusion part which form a stepped portion.

In an exemplary embodiment, the second protrusion may include a second receiving groove to receive the second protrusion part formed inner side of the cover. The second protrusion part may be inserted into the second receiving groove when the case is combined with the cover.

In an exemplary embodiment, the case may have a first gripping groove formed at a side of the protrusion part.

In an exemplary embodiment, the cover may have a through hole formed at a bottom surface of the second receiving groove.

In an exemplary embodiment, the film member may include a protective film received in the through hole, a first release paper attached on a rear surface of the protective film, and a second release paper attached on a front surface of the protective film and on a boundary of the through hole.

In an exemplary embodiment, the first release paper may include a first-first release paper attached on an upper portion of the protective film, and a first-second release paper attached on the other portion of the protective film.

In an exemplary embodiment, the second release paper may include at least one or more of locking hole formed along a boundary of the second release paper. At least one or more of locking protrusion corresponding to the locking hole may be formed on a front surface of the cover configured to be combined with the locking hole.

In an exemplary embodiment, the film member further include grip tapes attached on each of the first release paper and the second release paper.

### Effect of the Invention

According to the protective film attaching apparatus of the present invention, rather than general public is also a trained technician can easily attach the protective film on the front display area of the portable electronic apparatus.

In addition, according to the protective film attaching apparatus, the protective film may be attached on a correct position with our bubbles, so that cost and time may be saved due to repurchase and rework when the attachment is failed.

### Brief Description of Drawings

FIG. 1 is a perspective view illustrating a protective film attaching apparatus according to a first embodiment of the invention;
FIG. 2 is an exploded perspective view illustrating the protective film attaching apparatus according to the first embodiment;
FIGS. 3 to 7 are perspective views illustrating use of the protective film attaching apparatus according to the first embodiment;
FIG. 8 is a perspective view illustrating a protective film attaching apparatus according to a second embodiment of the invention;
FIG. 9 is an exploded perspective view illustrating the protective film attaching apparatus according to the second embodiment;
FIGS. 10 to 14 are perspective views illustrating use of the protective film attaching apparatus according to the second embodiment;
FIG. 15 is a perspective view illustrating a protective film attaching apparatus according to a third embodiment of the invention;

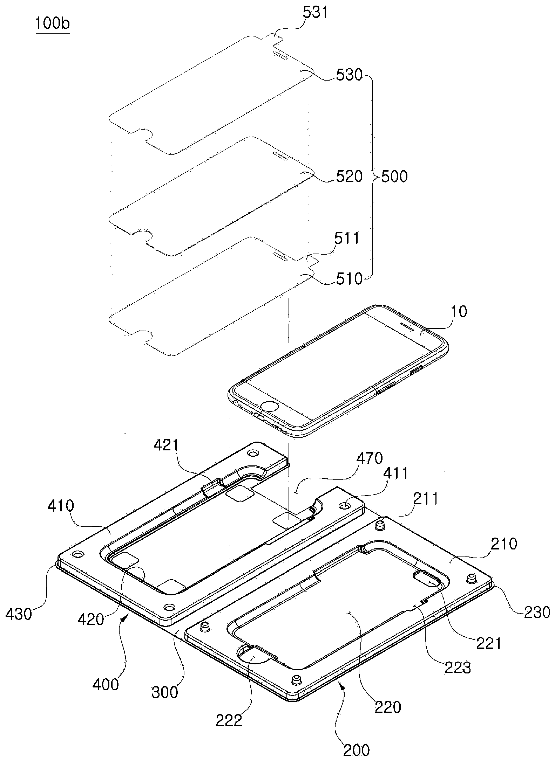

FIG. 16 is an exploded perspective view illustrating the protective film attaching apparatus according to the third embodiment;
FIGS. 17 to 20 are perspective views illustrating use of the protective film attaching apparatus according to the third embodiment;

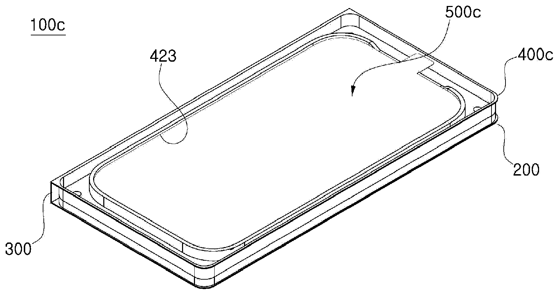

FIG. 21 is a perspective view illustrating a protective film attaching apparatus according to a fourth embodiment of the invention;

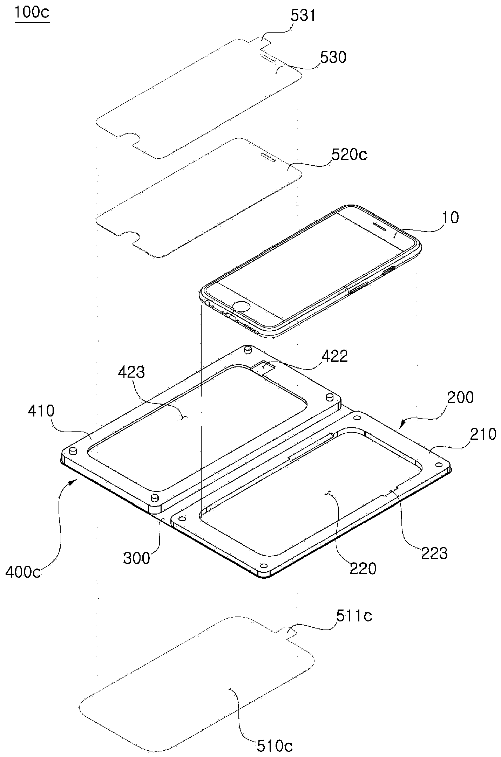

FIG. 22 is an exploded perspective view illustrating the protective film attaching apparatus according to the fourth embodiment;
FIGS. 23 to 26 are perspective views illustrating use of the protective film attaching apparatus according to the fourth embodiment;

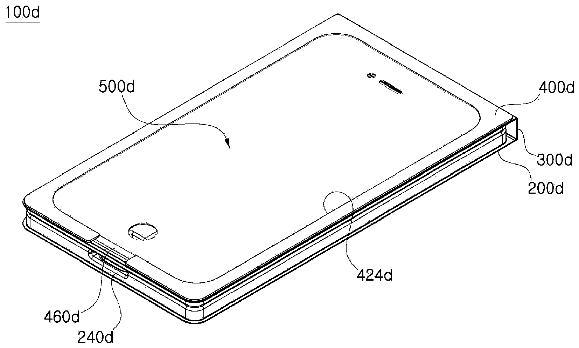

FIG. 27 is a perspective view illustrating a protective film attaching apparatus according to a fifth embodiment of the invention;

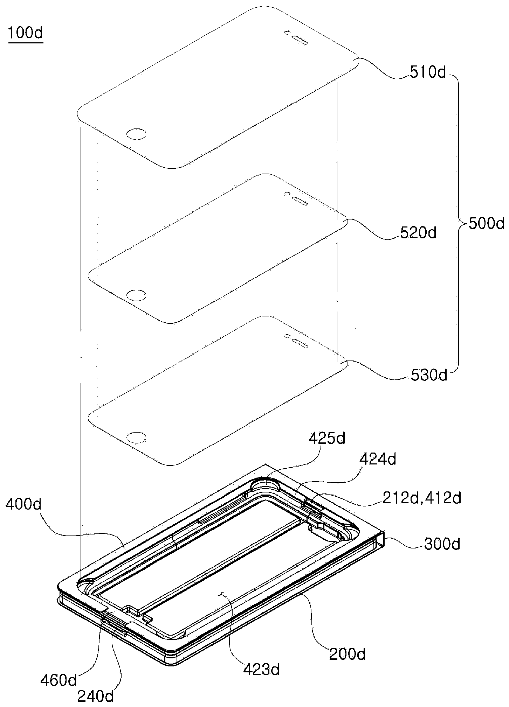

FIG. 28 is an exploded perspective view illustrating the protective film attaching apparatus according to the fifth embodiment;

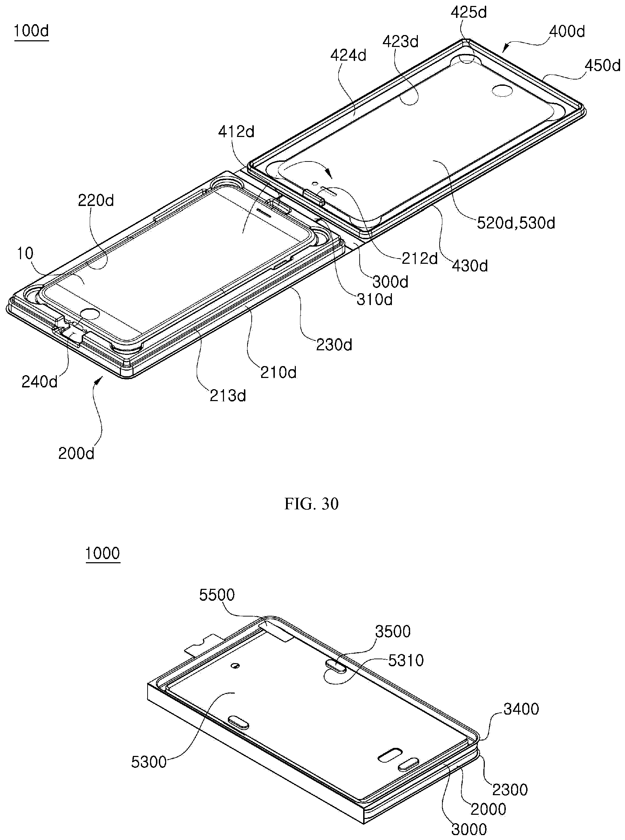

FIG. 29 is a perspective views illustrating use of the protective film attaching apparatus according to the fifth embodiment;
FIG. 30 is a perspective view illustrating a protective film attaching apparatus according to a sixth embodiment of the invention;

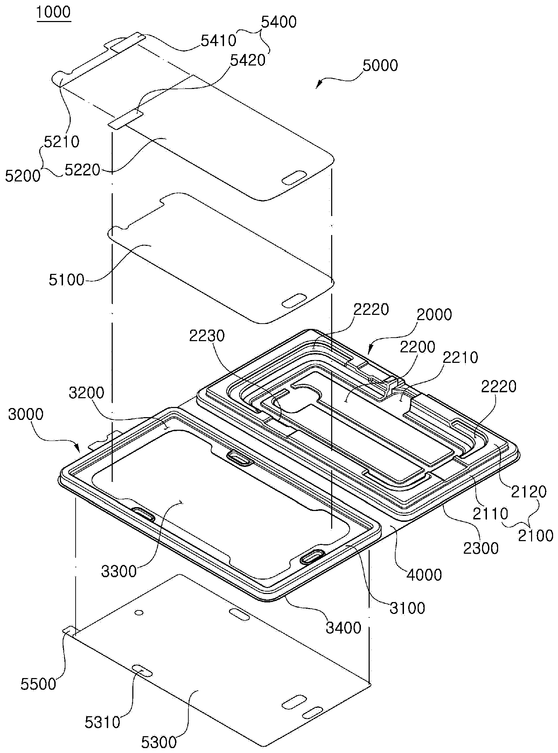

FIG. 31 is an exploded perspective view illustrating the protective film attaching apparatus according to the sixth embodiment; and
FIGS. 32 to 37 are perspective views illustrating use of the protective film attaching apparatus according to the sixth embodiment.

### Detailed Description of the Invention

Hereinafter, the invention will be explained in detail with reference to the accompanying drawings. The present invention may, however, be embodied in many different forms and should not be construed as limited to the example embodiments set forth herein and shown in accompanying drawings. The same reference numerals will be used to refer to the same or like parts.

In addition, although example embodiments below are explained with a smart phone as an example of a portable electronic apparatus, the present invention may be applied to various portable electronic apparatus such as table PC, a PDA, a GPS navigation, MP3 player and etc.

In addition, as used herein, 'front' means front side of the portable electronic apparatus which a display area of the portable electronic apparatus with a case is exposed, and 'rear' means rear side of the portable electronic apparatus which is opposite to the front of the portable electronic apparatus.

### First embodiment

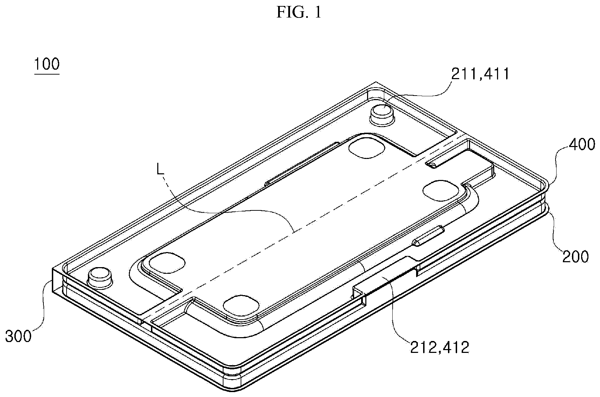

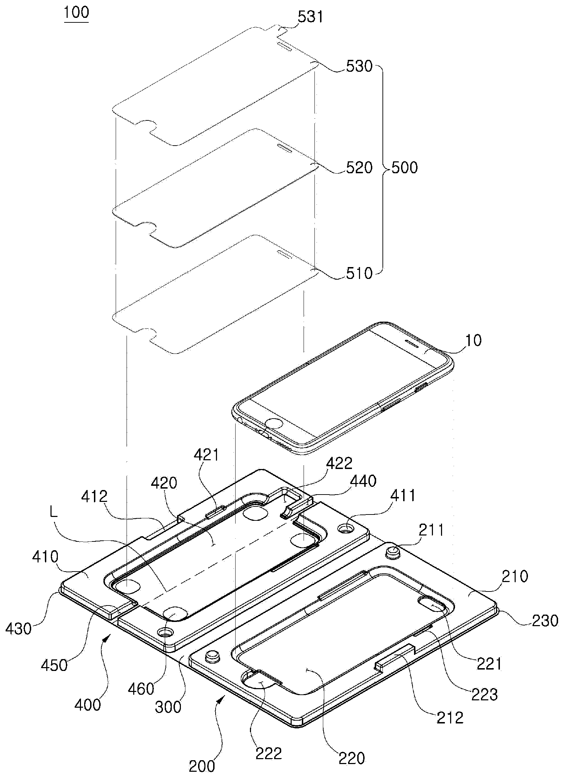

Referring to FIGS. 1 and 2, a protective film attaching apparatus according to the first embodiment of the invention will be explained hereinafter. As described in the figures, the protective film attaching apparatus 100 according to the first embodiment includes a case 200 which receives a portable electronic apparatus 10, a cover 400 for opening the case 200, and a film member 500 configured to applied to a front display area of the portable electronic apparatus 10. The film member 500 is received in the cover 400.

A case 200 may be formed of synthetic resin with small thickness, and may have a first protrusion part 210, and a first receiving groove 220. The first protrusion part 210 is protruded frontward with a predetermined height. The first receiving groove 220 is depressed rearward from a surface of the first protrusion part 210. Here, a first flange portion 230 may be formed outward along a boundary of the first protrusion part 210 with a predetermined width.

At least one or more of guide protrusions 211 may be formed on the first protrusion part 210. The guide protrusions 211 are spaced apart from each other. The guide protrusion 211 is inserted into a guide groove 411 of the cover 400 when the case 200 is combined with the cover 400, so that the guide protrusions 211 may guide combination of the case 200 and the cover 400. In addition, a combining protrusion 212 may be formed on the first protrusion part 210. The combining protrusion 212 may be inserted into a combining groove 412 of the cover 400 when the case 200 is combined with the cover 400. Here, unlike the figures, is may be possible that the guide protrusion 211 may be formed on the cover 400, and the guide groove 411 may be formed on the case 200. Similarly, the combining protrusion 212 may be formed on the cover 400, and the combining groove 412 may be formed on the case 200.

A rear surface of the portable electronic apparatus 10 is received in the first receiving groove 220. Here, to receive a camera of the portable electronic apparatus 10 which is protruded from the rear surface, a lens part receiving groove 221 may be formed at a portion of the first receiving groove 220. For example, the lens part receiving groove 221 may be formed at an upper portion of the first receiving groove 220. In addition, a gripping groove 222 for removing the portable electronic apparatus 10 may be formed at another portion of the first receiving groove 220. For example, the gripping groove 222 may be formed at a lower portion of the first receiving groove 220. In addition, a first operation button groove 223 which is corresponding to an operation button at a side surface of the portable electronic apparatus 10 may be formed at an edge of the first receiving groove 220.

A connecting part 300 having a predetermined width is formed from the first flange portion 230 of the case 200, and the cover 400 is connected to the connecting part 300. The case 200, the cover 400 and the connecting part 300 may be integrally formed. The case 200 and the cover 400 may be mutually rotated about the connecting portion 300. For this, folding lines (not shown) along a length direction may be formed at both sides of the connecting part 300 in a width direction. For example, the folding line may be a concave groove along the length direction. The folding line may be a dot lines which has a plurality of concave grooves spaced apart by the length direction, or a break line.

The cover 400 is formed opposite to the case 200 with respect to the connecting part 300. The cover 400 may be folded along the folding line of the connecting part 300, so that the cover 400 may open and close a front of the case 200.

The cover 400 may include a second protrusion part 410 on a rear surface which faces the first protrusion par 210 of the case 200 and a second receiving groove 420. The second protrusion part 410 is protruded rearward with a predetermined height. The second receiving groove 420 is depressed frontward from a surface of the second protrusion part 410. Here, a second flange portion 430 may be formed outward along a boundary of the second protrusion part 410 with a predetermined width.

At least one or more of guide grooves 411 may be formed on the second protrusion part 410. The guide grooves 411 are spaced apart from each other. The guide groove 411 is inserted into a guide protrusion 211 of the case 200 when the case 200 is combined with the cover 400, so that the guide grooves 411 may guide combination of the case 200 and the cover 400. In addition, a combining groove 412 may be formed on the second protrusion part 410 corresponding to the combining protrusion 212 which is mentioned above.

When the case 200 is combined with the cover 400, a front face of the portable electronic apparatus 10 is received in the second receiving groove 420. Here, to receive the operation button of at the side surface of the portable electronic apparatus 10, a second operation button groove 421 may be formed at an edge of the second receiving groove 420. The first operation button groove 223 which is mentioned above and the second operation button groove 421 may receive the operation button together.

In addition, a folding line L is formed from an upper edge of the cover 400 to lower edge of the cover 400 configured to fold the cover 400 in a width direction. Here, a first extending groove 440 is extended from the upper edge of the cover 400 to an upper portion of the second receiving groove 420. A second extending groove 450 is extended from the lower edge of the cover 400 to a lower portion of the second receiving groove 420. The folding line L straightly extends from the first extending groove 440 to the second extending groove 450 through the second receiving groove 420.

Here, a rear surface of the second flange portion 430, a bottom surface of the first extending groove 440, a bottom surface of the second receiving groove 420 and a bottom surface of the second extending groove 450 may preferably be disposed at a same plane.

An adhesive 460 may be provided on each of corner portions of the bottom surface of the second receiving groove 420. In some example embodiment, the adhesive 460 may be a double-faced pressure sensitive adhesive film or tape.

The film member 500 may be received in the second receiving groove 420. Here, the film member 500 includes a first release paper 510 which is attached to the bottom surface of the second receiving groove 420 by the adhesive 460, a protective film 520 which is attached to a rear surface of the first release paper 510, and a second release paper 530 which is attached to a rear surface of the protective film 520. Thus, the first release paper 510 is attached on a front surface of the protective film 520, and the second release paper 530 is attached on a rear surface of the protective film 520, and then a front surface of the first release paper 510 is attached on the bottom surface of the second receiving groove 420 by the adhesive 460. In addition, an adhesive layer is formed on the rear surface of the protective film 520 to firmly attach the protective film 520 on the display area of the portable electronic apparatus 10, the protective film 520 may be formed by tempered glass.

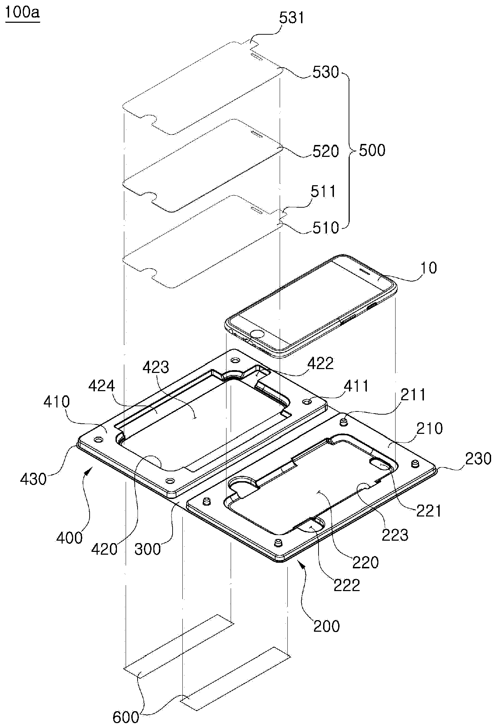

In addition, to easily remove the first release paper 510 from the protective film 520, a first grip tape (refers to 511 of FIG. 9) may be formed upper side portion of the first release paper 510. Here, the first grip tape 511 may be integrally formed with the first release paper 510, or an additional first grip tape 511 may be attached on the first release paper 510. When the additional first grip tape 511 is attached on the first release paper 510, a first end of the first grip tape 511 is attached to the upper side of the first release paper 510, and a second end of the first release paper 510 is protruded toward upper outer direction. In addition, a second grip tape 531 may be integrally formed with the second release paper 530, or an additional second grip tape 531 may be attached on the second release paper 530 at a upper side of the to easily remove the second release paper 530 from the protective film 520. A grip tape receiving groove 422 may be formed at an upper side of the second receiving groove 420 to receive protruded portion of the first grip tape 511 and the second grip tape 531.

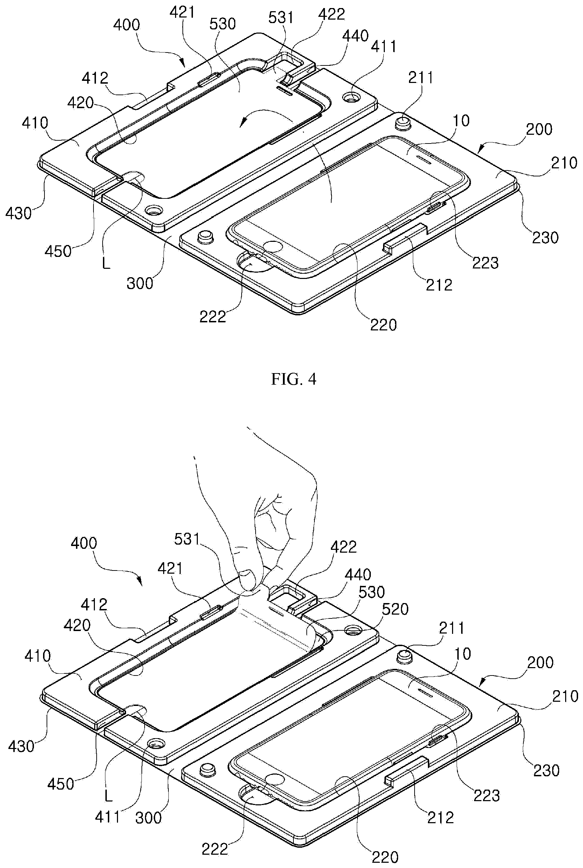

Referring to FIGS. 3 to 7, a method of attaching the protective film 520 using the protective film attaching apparatus 100 according to the first embodiment will be described.

Firstly, the protective film attaching apparatus 100 is provided with a film member 500 in the second receiving groove 420 and the case 200 which is combined with the cover 400. The case 200 may be opened if necessary. In addition, additional film member 500 may be separately purchased, and then the film member 500 may be attached on the second receiving groove 420, so that protective film attaching apparatus 100 may be reusable.

Referring to FIG. 3, the cover 400 is disunited from the case 200, the portable electronic apparatus 10 is received in the first receiving groove 220 of the case 200 configured to expose the front surface of the portable electronic apparatus 10.

And then, referring to FIG. 4, the second release paper 530 is removed from the film member 500 in the second receiving groove 420 of the cover 400 to expose adhesive surface of the protective film 520.

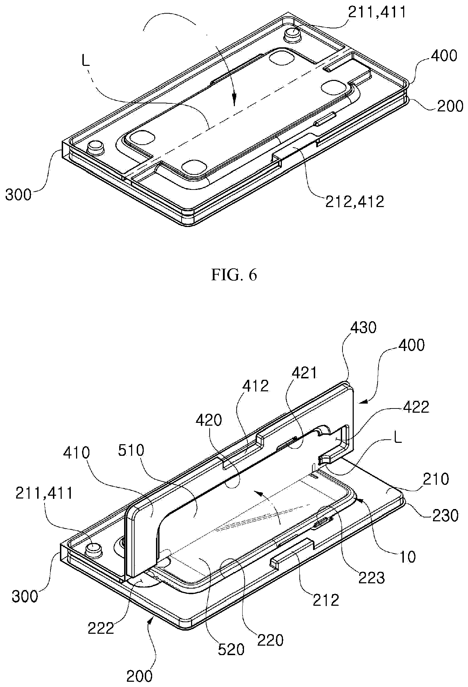

And then, referring to FIG. 5, the cover 400 is rotated to be combined with the case 200. Here, the guide protrusions 211 is inserted into the guide groove 411, and the combining protrusion 212 is inserted into the combining groove 412. After combination of the cover 400, front of the cover 400 is pressed or rubbed to apply the protective film 520 on front display area of the portable electronic apparatus 10.

And then, referring to FIG. 6, the cover 400 is folded frontward along the folding line L of the cover 400. Here, another portion of the cover 400 is fixed because the combining protrusion is inserted in the combining groove 412. The protective film 520 is attached on the front display area of the portable electronic apparatus 10. The first release paper 510 which is attached on the adhesive in the second receiving groove 420 is folded with the cover 400 which is folded, so that first release paper 510 is removed from the protective film 520.

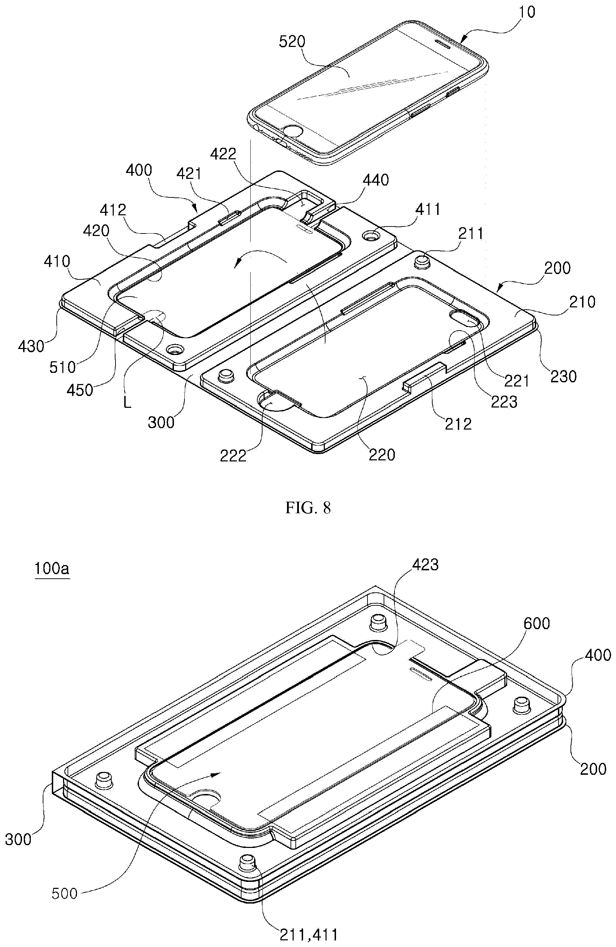

And then, referring to FIG. 7, the other portion of the cover 400 is rotated to disunite from the case 200, remained portion of the first release paper 510 which is remained on the protective film 520 is totally removed from the protective film 520. And then user may finish attachment of the protective film 520 by rubbing or pressing front surface of the protective film 520.

And then, the portable electronic apparatus 10 may be removed from the first receiving groove 220. If another attachment is necessary, the first release paper 510 may be removed from the second receiving groove 420, and then an additional film member 500 may be purchased and attached in the second receiving groove 420, and then the above process may be repeated.

### Second embodiment

Referring to FIGS, 8 and 9, a protective film attaching apparatus according to the second embodiment of the invention will be explained hereinafter. As described in the figures, the protective film attaching apparatus 100a according to the second embodiment includes a case 200, a cover 400 and a film member 500 like the first embodiment, but the protective film attaching apparatus 100a has a through hole 423 formed at a bottom surface of the second receiving groove 420, a stepped portion 424 which is formed at both sides of the second receiving groove 420 in a width direction, and a pair of adhesive tapes which support the film member 500. In addition, unlike the fir embodiment, the protective film attaching apparatus 100a does not have a folding line L in the second receiving groove 420 of the cover 400.

Accordingly, the same reference numerals will be used to refer to the same or like parts of the first embodiment. Any further detailed descriptions concerning the same elements will be omitted.

According to the protective film attaching apparatus 100a according to the second embodiment, the through hole 423 is formed at the bottom surface of the second receiving groove 420 of the cover 400. In addition, the stepped portions 424 are formed at the rear surface of the cover 400. Both sides of the second receiving groove 420 is extended outward with a predetermined width, so that each of the stepped portions 424 is formed at each of both sides of the through hole 423 in a width direction.

The film member 500 is received in the second receiving groove 420. Here, width and length of the through hole 423 is larger than width and length of the film member 500. Thus, a pair of adhesive tapes 600 is attached to both sides of the film member 500 in a width direction, respectively to prevent departure of the film member 500 from the through hole 423.

Here, a side of the adhesive tape 600 is attached to a side of the film member 500 in a width direction. Another side of the adhesive tape 600 is attached to a front surface of the cover 400 corresponding to the stepped portion 424. Thus, according to the second embodiment, the film member 500 is supported by the adhesive tape 600 in the through hole 423 with being spaced apart from the stepped portion 424.

In addition, to properly locate the film member 500 in through hole 423, an additional guide jig (not shown) for attaching the adhesive tape 600 may be used when the adhesive tape 600 is attached. Here, the guide jig has a shape corresponding to the second receiving groove 420, and includes a body which is inserted into the second receiving groove 420, and a pair of wing parts which is protruded from both side of the body in a width direction to support the stepped portion 424. In addition, a locking jaw is formed at an upper portion of the body and along boundary of the body. A Edge of the through hole 423 is supported by the locking jaw when the body of the guide jig is inserted into the second receiving groove 420. When the film member 500 is received in, an edge of the film member 500 is supported by the inner portion of the locking jaw. Thus, the film member 500 is properly located, and then one side of the adhesive tape 600 is attached on the film member 500, and then the other side of the adhesive tape 600 is attached on the front surface of the cover 400 corresponding to the stepped portion 424.

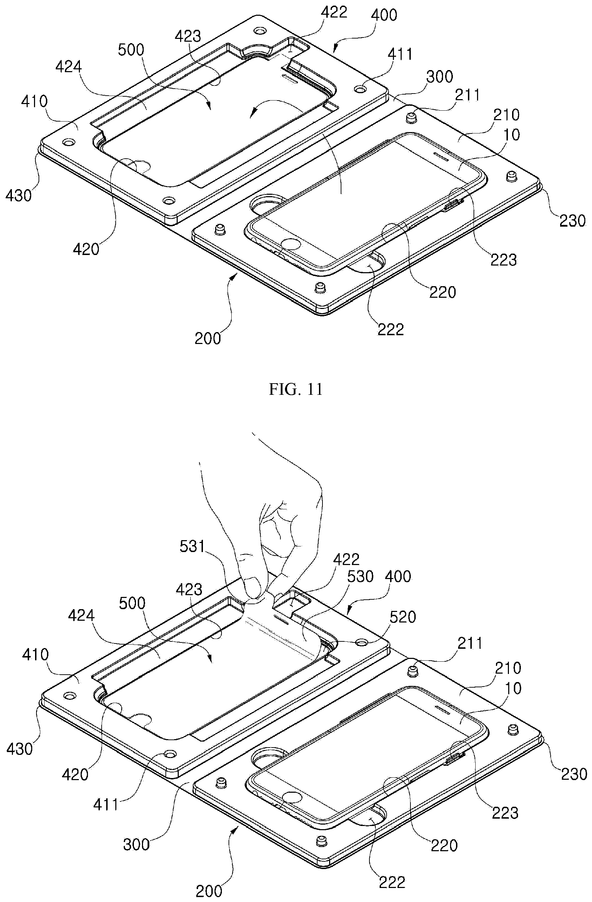

Referring to FIGS. 10 to 14, a method of attaching the protective film 520 using the protective film attaching apparatus 100a according to the second embodiment will be described.

Firstly, the protective film attaching apparatus 100a is provided with the film member 500 in the second receiving groove 420 and the case 200 which is combined with the cover 400. The case 200 may be opened if necessary. In addition, additional film member 500 may be separately purchased, and then the film member 500 may be attached on the second receiving groove 420, so that protective film attaching apparatus 100a may be reusable.

Referring to FIG. 10, the cover 400 is disunited from the case 200, the portable electronic apparatus 10 is received in the first receiving groove 220 of the case 200 configured to expose the front surface of the portable electronic apparatus 10.

And then, referring to FIG. 11, the second release paper 530 is removed from the film member 500 in the second receiving groove 420 of the cover 400 to expose adhesive surface of the protective film 520.

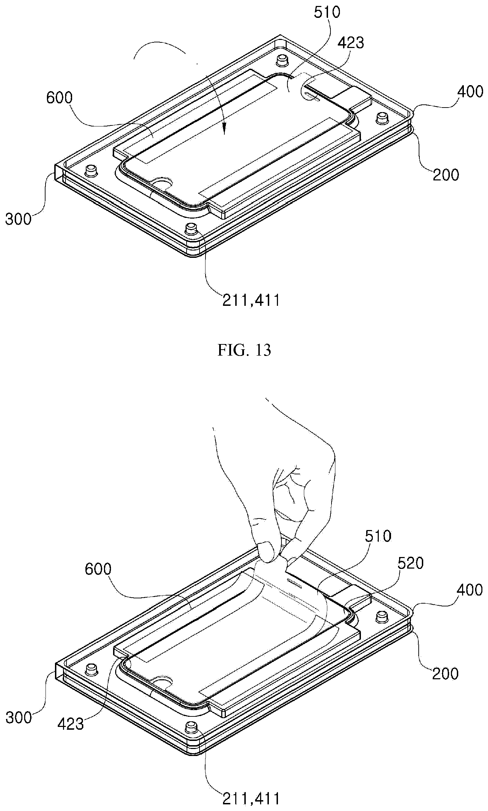

And then, referring to FIG. 12, the cover 400 is rotated to be combined with the case 200. Here, the guide protrusions 211 is inserted into the guide groove 411. It is also possible that additional combining protrusion and combining groove for combination are formed like the first embodiment. After combination of the cover 400, the first release paper 510 of the film member 500 is pressed or rubbed through the through hole 423 of front surface of the cover 400 to apply the protective film 520 on front display area of the portable electronic apparatus 10.

And then, referring to FIG. 13, the first release paper 510 is removed from the protective film 520 through the through hole 423. Here, the adhesive tape 600 which is attached on both sides of the second release paper 530 in a width direction is removed with the second release paper 530.

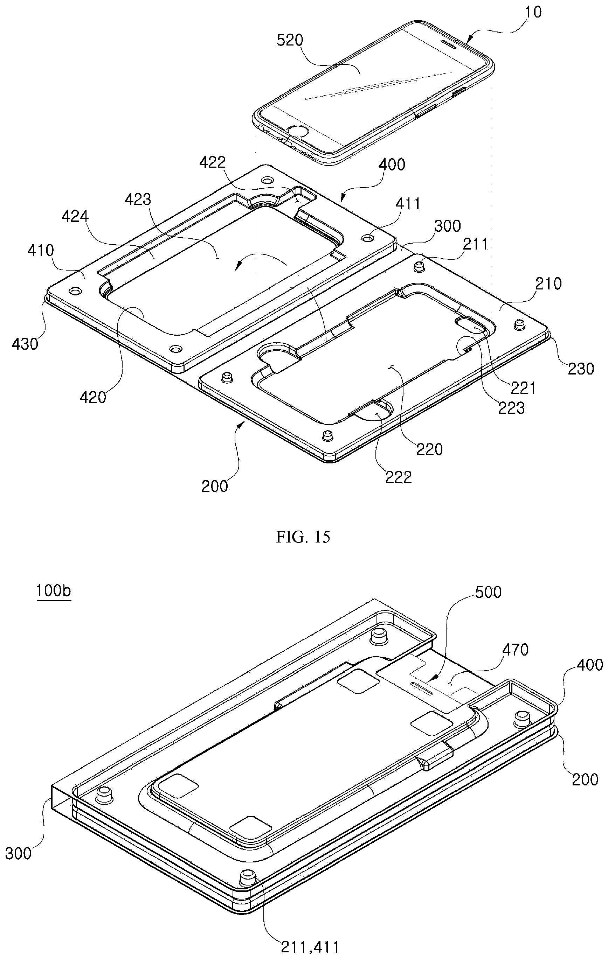

And then, user may finish attachment of the protective film 520 by rubbing or pressing front surface of the protective film 520. As described in figures 14, the cover 400 is opened, and then the portable electronic apparatus 10 on which the protective film 520 is attached is separated from the first receiving groove 220. Attachment process of the protective film 520 is finished or the portable electronic apparatus 10 can be used.

If another attachment is necessary, an additional film member 500 may be purchased and received in the through hole 423 using the adhesive tape 600, and then the above process may be repeated. Here, the guide jig which is mentioned above may be used to properly locate the film member 500.

### Third embodiment

Referring to FIGS, 15 and 16, a protective film attaching apparatus according to the third embodiment of the invention will be explained hereinafter. As described in the figures, the protective film attaching apparatus 100b according to the third embodiment includes a case 200, a cover 400 and a film member 500 like the first embodiment, but unlike the fir embodiment, the protective film attaching apparatus 100b does not have a folding line L in the second receiving groove 420 of the cover 400, the protective film attaching apparatus 100b has an incision portion 470 is formed at an upper portion of the second receiving groove 420.

Accordingly, the same reference numerals will be used to refer to the same or like parts of the first embodiment. Any further detailed descriptions concerning the same elements will be omitted.

According to the protective film attaching apparatus 100b according to the third embodiment, the incision portion 470 is formed from an upper edge of the cover 400 to an upper portion of the second receiving groove 420 with predetermined width and length. Accordingly, when the case 200 and the cover 400 are combined with each other, an upper portion of the film member 500 is exposed through the incision portion 470 of a front surface of the cover 400. User may remove the first release paper 510 from the protective film 520 by opening the cover 400 with pressing the upper portion of the protective film 520 through the incision portion 470 after attachment of the protective film 520.

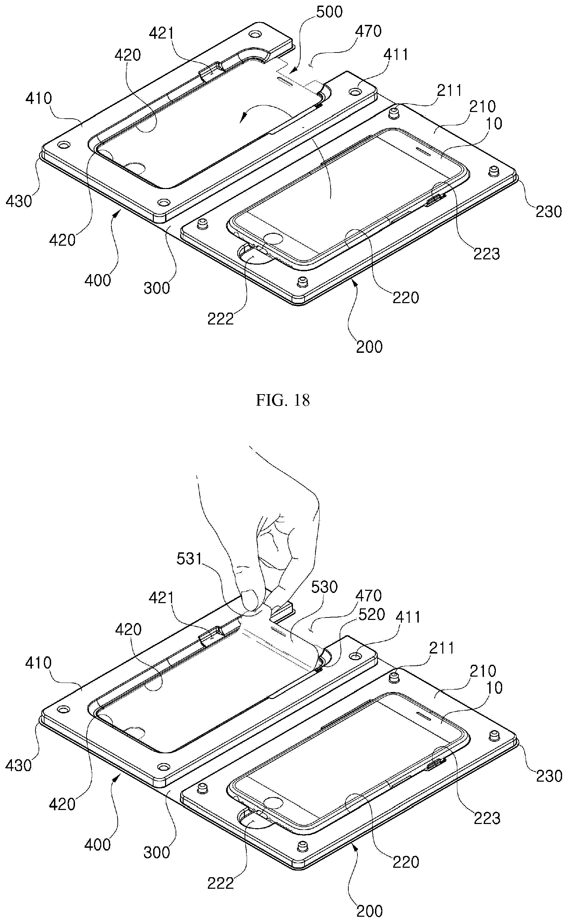

Referring to FIGS. 17 to 20, a method of attaching the protective film 520 using the protective film attaching apparatus 100b according to the third embodiment will be described.

Firstly, the protective film attaching apparatus 100b is provided with the film member 500 in the second receiving groove 420 and the case 200 which is combined with the cover 400. The case 200 may be opened if necessary. In addition, additional film member 500 may be separately purchased, and then the film member 500 may be attached on the second receiving groove 420, so that protective film attaching apparatus 100 may be reusable.

Referring to FIG. 17, the cover 400 is disunited from the case 200, the portable electronic apparatus 10 is received in the first receiving groove 220 of the case 200 configured to expose the front surface of the portable electronic apparatus 10.

And then, referring to FIG. 18, the second release paper 530 is removed from the film member 500 in the second receiving groove 420 of the cover 400 to expose adhesive surface of the protective film 520.

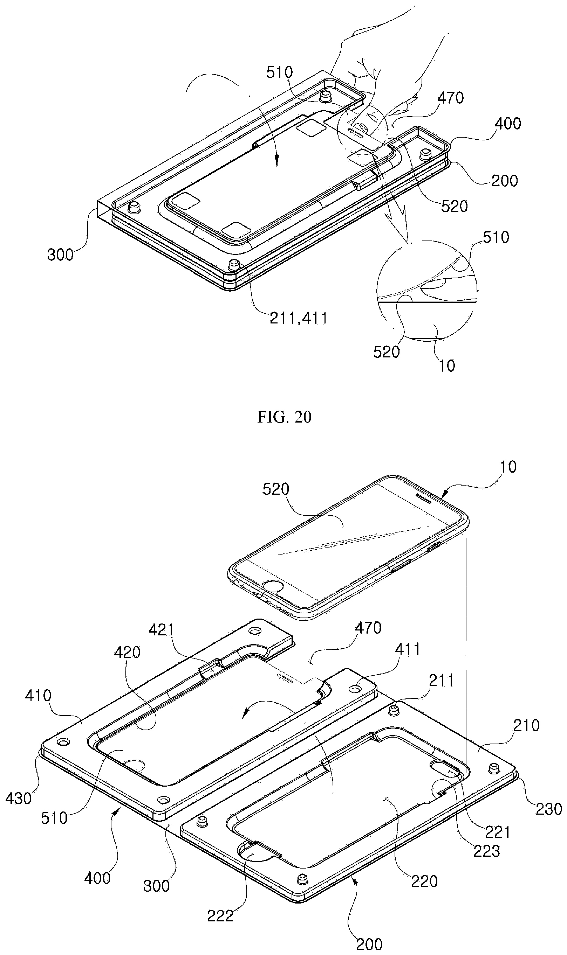

And then, referring to FIG. 19, the cover 400 is rotated to be combined with the case 200. Here, the guide protrusions 211 is inserted into the guide groove 411. It is also possible that additional combining protrusion and combining groove for combination are formed like the first embodiment. After combination of the cover 400, the first release paper 510 of the film member 500 is pressed or rubbed through the through hole 423 of front surface of the cover 400 to apply the protective film 520 on front display area of the portable electronic apparatus 10.

And then, an upper portion of the first release paper 510 is released from the upper portion of the protective film 520 through the incision portion 470. The cover 400 is opened with pressing the upper portion of the protective film 520. Here, referring to FIG. 20, the protective film 520 is remained on the display area of the portable electronic apparatus 10, and the first release paper 510 on the second receiving groove 420 is rotated with the cover 400, so that the first release paper 510 is removed from the protective film 520.

And then, user may finish attachment of the protective film 520 by rubbing or pressing front surface of the protective film 520. The cover 400 is opened, and then the portable electronic apparatus 10 on which the protective film 520 is attached is separated from the first receiving groove 220. Attachment process of the protective film 520 is finished or the portable electronic apparatus 10 can be used.

If another attachment is necessary, the first release paper 510 may be removed from the second receiving groove 420, and then an additional film member 500 may be purchased and attached in the second receiving groove 420, and then the above process may be repeated.

### Fourth embodiment

Referring to FIGS, 21 and 22, a protective film attaching apparatus according to the fourth embodiment of the invention will be explained hereinafter. As described in the figures, the protective film attaching apparatus 100c according to the fourth embodiment includes a case 200, a cover 400c and a film member 500c like the first embodiment, but the cover 400c has a plate shape, a through hole 423 is formed at the cover 400c, and edges of a first release paper 510c are attached along edges of the through hole 423 of a front surface of the cover 400c.

Accordingly, the same reference numerals will be used to refer to the same or like parts of the first embodiment. Any further detailed descriptions concerning the same elements will be omitted.

According to the fourth embodiment, the cover 400c has overall plate shape. The through hole 423 is formed in the middle of the cover 400c. The through hole 423 has width and length larger than width and length of the first receiving groove 220 of the case 200.

In addition, the film member 500c includes a protective film 520c which formed using polyurethane resin, a first release paper 510c attached on a front surface of the protective film 520c, and the second release paper 530 attached on a rear surface of the protective film 520c. Here, width and length of the first release paper 510c is larger than width and length of the protective film 520c and the second release paper 530.

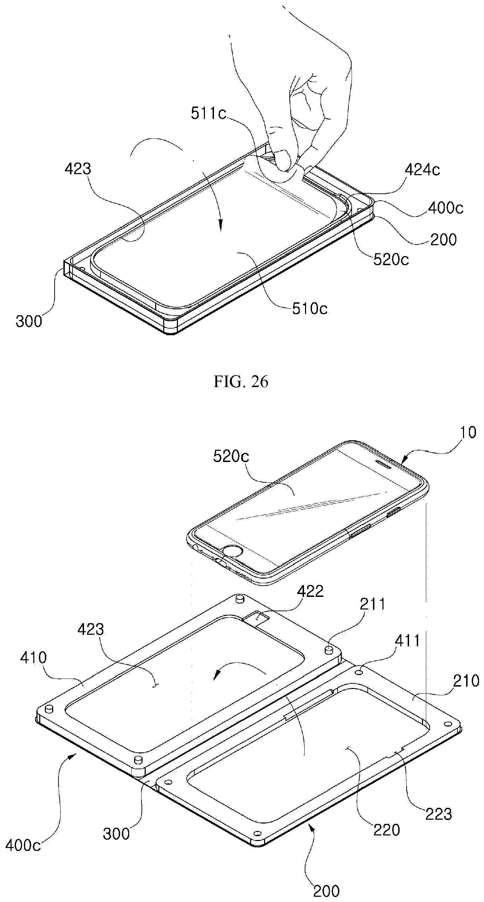

A stepped portion (refers to 424c of FIG. 25) is formed at the front surface of the cover 400 along boundary of the through hole 423. The film member 500c is located in the through hole 423. Here, boundary of the first release paper 510c is attached along the stepped portion 424c. Thus, according to the fourth embodiment, the boundary of the first release paper 510c is attached on the through hole 423 along the boundary of the through hole 423, and the protective film 520c and the second release paper 530 are supported in the through hole 423 with being spaced apart from the stepped portion 424c. In some example embodiment, the boundary of the first release paper 510c may be directly attached on the front surface of the cover 400 along the boundary of the through hole 423 without the stepped portion 424c.

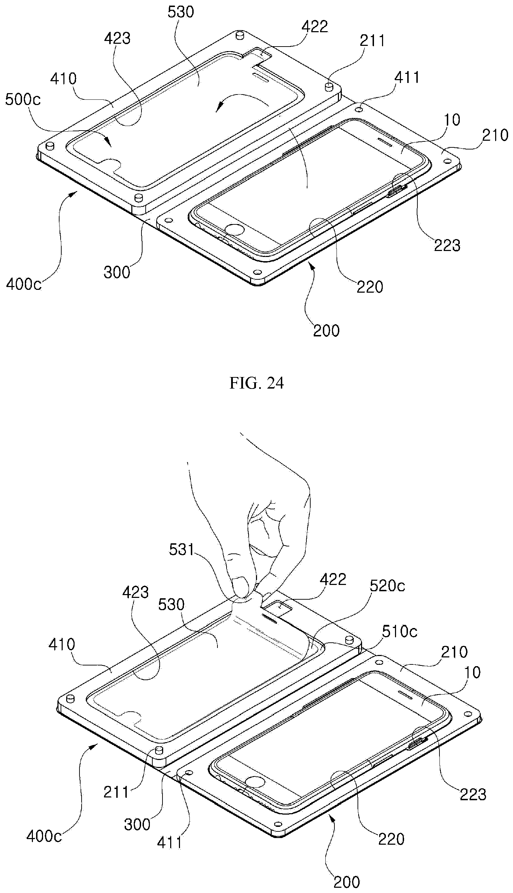

Referring to FIGS. 23 to 26, a method of attaching the protective film 520c using the protective film attaching apparatus 100c according to the fourth embodiment will be described.

Firstly, the protective film attaching apparatus 100c is provided with the film member 500c in the cover 400c and the case 200 which is combined with the cover 400c. The case 200 may be opened if necessary. In addition, additional film member 500c may be separately purchased, and then the film member 500c may be attached on the cover 400c, so that protective film attaching apparatus 100c may be reusable.

Referring to FIG. 23, the cover 400c is disunited from the case 200, the portable electronic apparatus 10 is received in the first receiving groove 220 of the case 200 configured to expose the front surface of the portable electronic apparatus 10.

And then, referring to FIG. 24, the second release paper 530 is removed from the film member 500c on the rear surface of the cover 400 to expose adhesive surface of the protective film 520c.

And then, referring to FIG. 25, the cover 400c is rotated to be combined with the case 200. Here, the guide protrusions 211 is inserted into the guide groove 411. It is also possible that additional combining protrusion and combining groove for combination are formed like the first embodiment. After combination of the cover 400c, the first release paper 510c of the film member 500c is pressed or rubbed through the through hole 423 to apply the protective film 520c on front display area of the portable electronic apparatus 10.

And then, a first grip tape 511c is pulled to remove boundary of the first release paper 510c along the stepped portion 424c of the cover 400. Here, the first release paper 510c is removed from the protective film 520c attached on the front display area of the portable electronic apparatus 10. User may finish attachment of the protective film 520c by rubbing or pressing front surface of the protective film 520c through the through hole 423, or may press or rub the front surface of the protective film 520c to finish the attachment after the cover 400c is opened like described in FIG. 26. The user may take the portable electronic apparatus 10 from the first receiving groove 220 to use the portable electronic apparatus 10.

If another attachment is necessary, an additional film member 500c may be purchased and the boundary of the first release paper 510c is attached on the stepped portion 424c of the cover 400c, and then the above process may be repeated. Here, width and length of the first release paper 510c is larger than width and length of the protective film 520c and the second release paper 530. An adhesive layer is formed along the boundary of the first release paper 510c, and the adhesive layer may preferably be protected by a third release paper (not shown).

### Fifth embodiment

Referring to FIGS, 27 to 29, a protective film attaching apparatus 100d according to the fifth embodiment of the invention will be explained hereinafter. As described in the figures, the protective film attaching apparatus 100d according to the fifth embodiment includes a case 200d, a cover 400d and a film member 500d which is attached through the through hole 423d of the cover 400d like the fourth embodiment, but a connecting part 300d and the cover 400 are sequentially formed at a side of the case 200d in a length direction.

Accordingly, the same reference numerals will be used to refer to the same or like parts of the fourth embodiment. Any further detailed descriptions concerning the same elements will be omitted.

According to the protective film attaching apparatus 100d according to the fifth embodiment, the connecting part 300d is formed from a side of the case 200d in a length direction. Thus, the connecting part 300d is formed from a first flange portion 230d at upper or lower portion of the case 200d, and a second flange portion 430d is formed from upper or lower portion of the connecting part 300d. The connecting part 300d is integrally formed with the first flange portion 230d and the second flange portion 430d.

Unlike the cover of the above embodiments which rotates to open the case on a width direction, the cover 400 according to the fifth embodiment rotates in the length direction to open the case 200d.

Here, like the fourth embodiment, a stepped portion 424d is formed at a front surface of the cover 400d along boundary of the through hole 423d, and boundary of the first release paper 510d is attached along the stepped portion 424d, or the boundary of the first release paper 510d is directly attached on the front surface of the cover 400d along the boundary of the through hole 423d without the stepped portion 424d. Thus, attachment process of a protective film 520 formed using polyurethane resin is similar to that of the fourth embodiment.

In addition, according to the fifth embodiment, a side wall 450d is protruded from the cover 400 along boundary of a rear face of the cover 400 toward rearward, and spaced apart from the through hole 423d. A locking jaw 213d is formed on a side of a first protrusion part 210d of the case 200d along the boundary of the case 200d, so that an upper portion of the first protrusion part 210d makes contact to an inner side of the side wall 450d and the side wall 450d is supported by the locking jaw 213d when the cover 400d is combined with the case 200d.

In addition, a gripping groove 240d for easy opening of the cover 400 from the case 200d is formed at a side (lower portion in the figure) of the case 200d which is opposite to the connecting part 300d. A gripping groove 460d for easy grabbing of a second release paper 530 is formed at a side (upper portion in the figure) of the case which is opposite to the connecting part 300d.

In addition, an incision groove 425d is formed at a corner of the stepped portion 424d for easy attaching of the protective film 520d to a front corner portion of the portable electronic apparatus 10. The incision groove 425d has a circular arc shape. In addition, for easy taking the protective film attaching apparatus 100d out of packing box, a handle 310d having a U shape is formed at a central portion of the connecting part 300d. The handle 310d may be bent outward perpendicular to the connecting part 300d, so that user may pull the bent handle 310d to take the protective film attaching apparatus 100d out of packing box. In addition, the handle 310d may be further formed at the connecting part 300 of the first to third embodiments.

A method of attaching the protective film 520d using the protective film attaching apparatus 100d according to the fifth embodiment will be described.

The protective film attaching apparatus 100d is provided with the film member 500d in the cover 400d and the case 200d which is combined with the cover 400d. The case 200d may be opened if necessary. In addition, additional film member 500d may be separately purchased, and then the film member 500d may be attached on the cover 400d, so that protective film attaching apparatus 100d may be reusable.

Firstly, the cover 400c is disunited from the case 200. And then, the portable electronic apparatus 10 is received in the first receiving groove 220d of the case 200d configured to expose the front surface of the portable electronic apparatus 10.

And then, the second release paper 530d is removed from the film member 500d on the rear surface of the cover 400d to expose adhesive surface of the protective film 520d.

And then, the cover 400d is rotated in a length direction to be combined with the case 200d. Here, the combining protrusion 212d is inserted into the combining groove 412d, and the upper portion of the first protrusion part 210d makes contact to an inner side of the side wall 450d. After combination of the cover 400d, the first release paper 510d of the film member 500d is pressed or rubbed through the through hole 423d to apply the protective film 520 on front display area of the portable electronic apparatus 10.

And then, boundary of the first release paper 510d is removed from the protective film 520d along the stepped portion 424d of front surface of the cover 400. Here, the first release paper 510d is removed from the protective film 520d attached on the front display area of the portable electronic apparatus 10. User may finish attachment of the protective film 520d by rubbing or pressing front surface of the protective film 520d through the through hole 423, or may open the cover 400d and press or rub the front surface of the protective film 520d to finish the attachment.

If another attachment is necessary, an additional film member 500d may be purchased and the boundary of the first release paper 510d is attached on the stepped portion 424c of the cover 400c, and then the above process may be repeated. Here, width and length of the first release paper 510d is larger than width and length of the protective film 520d and the second release paper 530d. An adhesive layer is formed along the boundary of the first release paper 510d, and the adhesive layer may preferably be protected by a third release paper (not shown).

### Sixth embodiment

Referring to FIGS, 30 to 31, a protective film attaching apparatus 1000 according to the sixth embodiment of the invention will be explained hereinafter. As described in the figures, the protective film attaching apparatus 1000 of the sixth embodiment includes a case 2000 to receive a portable electronic apparatus 10a, a cover 3000 to open and close the case 2000, and a film member 5000 which is provided in the cover 3000.

The case 2000 may be formed of synthetic resin with small thickness, and may have a protrusion part 2100. The protrusion part 2100 is protruded frontward with a predetermined height along inner surface of the case 2000. A first receiving groove 2200 is depressed rearward from a front surface of the protrusion part 2100.

A rear surface of the portable electronic apparatus 10a is received in the first receiving groove 2200 of the case 2000. Accordingly, the first receiving groove 2200 may have a shape corresponding to the portable electronic apparatus 10a. In addition, width, length and depth of the first receiving groove 2200 may be configured according to size and shape of the portable electronic apparatus 10a.

A first flange portion 2300 having a predetermined width is formed along rear edges of protrusion part 2100. The protrusion part 2100 includes a first protrusion part 2110 protruded frontward from the first flange portion 2300 and a second protrusion part 2120 protruded frontward from inner portion of the first protrusion 2110. Thus, the protrusion part 2100 includes the first and second protrusion parts 2110 and 2120 protruded from an inner surface of the inner surface of the case 2000, and the first receiving groove 2200 is depressed from a front surface of the second protrusion part 2120.

A first gripping groove 2210 is formed at a side of the first receiving groove 2200 through the first and second protrusion parts 2110 and 2120 to outer side of the case 2000. The user may insert his finger into the first gripping groove 2210 to hold the case 2000 when the cover 3000 is opened.

In addition, second gipping grooves 2220 having a predetermined width are formed along upper and lower edges of the first receiving groove 2200, respectively. The user may take the portable electronic apparatus 10a out of the first receiving groove 2200. In addition, at least one or more of button groove 2230 is formed corresponding to control button at a side surface of the portable electronic apparatus 10a at an opposite side of the first gripping groove 2210.

A connecting part 4000 having a predetermined width is formed from the first flange portion 2300 of the case 2000, and the cover 3000 is connected to the connecting part 4000. The case 2000, the cover 3000 and the connecting part 4000 may be integrally formed. The case 2000 and the cover 3000 may be mutually rotated about the connecting portion 4000. For this, folding lines (not shown) along a length direction may be formed at both sides of the connecting part 4000 in a width direction. For example, the folding line may be a concave groove along the length direction. The folding line may be a dot lines which has a plurality of concave grooves spaced apart by the length direction, or a break line.

The cover 3000 is formed opposite to the case 2000 with respect to the connecting part 4000. The cover 3000 may be folded along the folding line of the connecting part 4000, so that the cover 3000 may open and close a front of the case 3000.

The cover 3000 includes a third protrusion part 3100 on a rear surface which faces the protrusion part 2100 of the case 2000, a second receiving groove 3200 and a through hole 330 formed through a bottom surface of the second receiving groove 3200. The third protrusion part 3100 is protruded rearward with a predetermined height. The second receiving groove 3200 is depressed frontward from a surface of the third protrusion part 3100. Here, a second flange portion 430 may be formed outward along a boundary of the second protrusion part 410 with a predetermined width. In addition, a second flange portion 3400 is formed along rear edges of the second protrusion part 2120 with a predetermined width.

The second protrusion part 2120 of the case 2000 is combined with the second receiving groove 3200 of the cover 3000 in interference fit when the case 2000 is combined with the cover 3000. Here, the first protrusion part 2110 makes contact with the third protrusion part 3100 of the cover 3000.

The film member 5000 is received in the second receiving groove 3200 to face the portable electronic apparatus 10a. The film member 5000 includes a protective film 5100 to be attached on a front display area of the portable electronic apparatus 10a, a first release paper 5100 which is attached on a rear surface of the protective film 5100 to protect the protective film 5100, and a second release paper 5300 which is attached on a front surface of the protective film 5100 to protect the protective film 5100.

Here, boundary of the second release paper 5300 is attached along boundary of the through hole 3300 by an adhesive. The protective film 5100 is attached on a bottom surface of the second release paper 5300. The protective film 5100 is received in the through hole 3300. A first release paper 5200 is attached on a rear surface of the protective film 5100. Thus, boundary of the second release paper 5300 is attached along edges of the second release paper 5300, so that the protective film 5100 which is attached on the second release paper 5300 is placed in the through hole 3300 with the first release paper 5200.

In addition, an adhesive layer may be formed on the rear surface of the protective film 5100 to firmly attach the protective film 5100 on the front display area of the portable electronic apparatus 10a. Here, the protective film 5100 may be formed of synthetic resin such as polyurethane resin or tempered glass.

In addition, a first grip tape 5400 and a second grip tape 5500 for easy removing from the protective film 5100 are attached on at a side of the first release paper 5200 and at a side of the second release paper 5300, respectively. Each of the first and second grip tapes 5400 and 5500 may be integrally formed with the first and second release paper 5200 and 5300, respectively. In some example embodiment, it may be possible that separate first and second grip tapes 5400 and 5500 are attached on the first and second release paper 5200 and 5300, respectively.

Here, the first release paper 5200 may include a first-first release paper 5210 attached on upper portion of the protective film 5100 and a first-second release paper 5220 attached on the other portion of the protective film 5100. This may prevent unwanted removing of the protective film 5100 from the second release paper 5300 or movement of the protective film 5100 when the first release paper 5200 is removed.

If the first release paper 5200 has too large size, it is possible that the protective film 5100 is removed with the first release paper 5200 when the first release paper 5200 is removed.

In addition, when a speaker or camera is formed upper portion of the portable electronic apparatus 10a, a speaker hole or lens hole corresponding to the speaker or camera is formed through the protective film 5100. If the first release paper 5200 having too large size is removed at once from the protective film 5100, alignment of the speaker hole or the lens hole may be bad due to movement of the protective film 5100. To prevent the problem, the first release paper 5200 may be divided the first-first release paper 5210 corresponding to a portion where the speaker hole or lens hole is formed and the first-second release paper 5220 corresponding to the other portion.

Here, the first grip tape 5400 may also include a first-first grip tape 5410 attached on the first-first release paper 5210, and a first-second grip tape 5420 attached on the first-second release paper 5220 .

The second release paper 5300 has at least one or more of locking hole 5310 is formed along boundary thereof. At least one or more of locking protrusion 3500 is formed on a front surface of the cover 3000 corresponding to the locking hole 5310.

Here, the locking hole 5310 of the second release paper 5300 guide the film member 5000 to a proper position. Thus, according to the example embodiment of the present invention, if user want to apply new protective film 5100 on the portable electronic apparatus 10a after using the film member 5000, new film member 500 having the protective film 5100 and the first and second release papers 5200 and 5300 are attached on the cover 3000, so that the case 2000 and cover 3000 may be reusable. Here, the locking protrusion 3500 of the cover 3000 is inserted into the locking hole 5310 of the second release paper 5300 when the film member 5000 is attached, so that the protective film 5100 may be placed on a proper position to be attached on the portable electronic apparatus 10a.

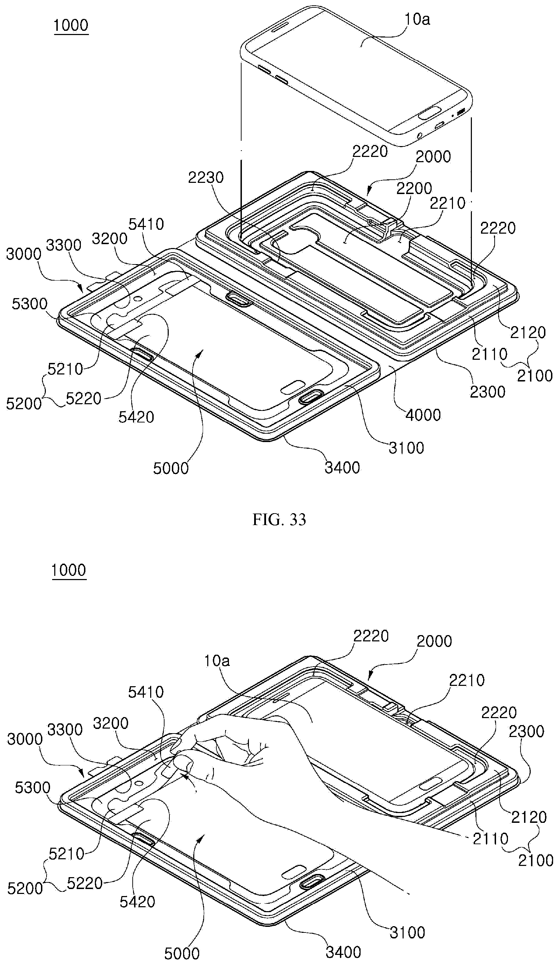

Referring to FIGS. 32 to 37, a method of attaching the protective film using the protective film attaching apparatus 1000 according to the sixth embodiment will be described.

Firstly, the protective film attaching apparatus 1000 is provided with the film member 5000 in the second receiving groove 3200 and the case 2000 which is combined with the cover 3000. The case 2000 may be opened if necessary. In addition, additional film member 5000 may be separately purchased or separately provided, and then the film member 5000 may be attached on the cover 3000, so that the cover 3000 and the case 2000 may be reusable.

Referring to FIG. 32, the cover 3000 is disunited from the case 2000, the portable electronic apparatus 10a is received in the first receiving groove 2200 of the case 2000 configured to expose the front surface of the portable electronic apparatus 10a.

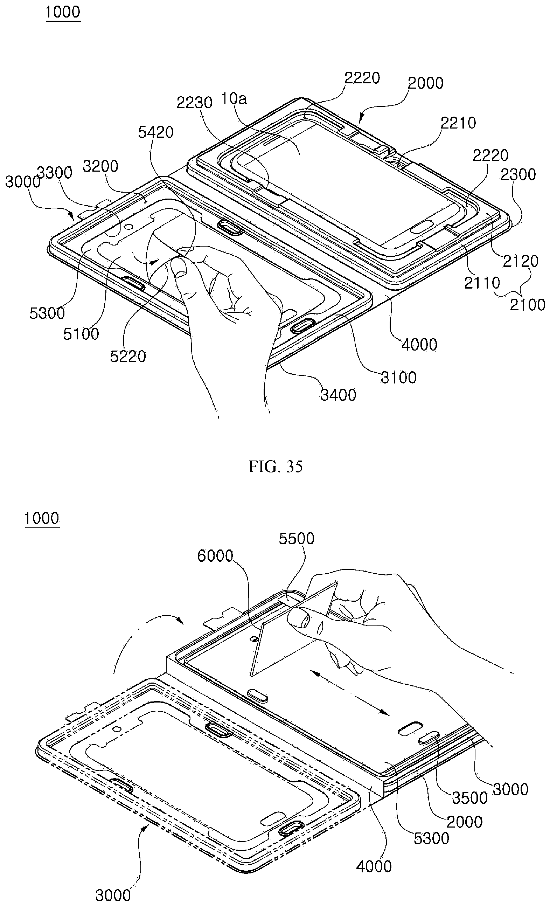

And then, referring to FIG. 33, the first-first release paper 5210 is removed from the film member 5000 received in the second receiving groove 3200. And then, referring to FIG. 34, by removing the first-second release paper 5220, a rear surface of the protective film 5100 is exposed. Here, order of removing the first-first release paper 5210 and the first-second release paper 5220 may be changed, and an adhesive layer may be formed on the rear surface of the protective film 5100.

And then, as described in FIG. 35, a cover 3000 is closed with the second protrusion part 2120 of the case 2000 is inserted into the second receiving groove 3200 of the cover 3000. Here, the front surface of the portable electronic apparatus 10a is received in the second receiving groove 3200, using a pad 6000 which is separately provided or user's finger or palm, the front surface of the second release paper 5300 is rubbed to attach the protective film 5100 on the front display area of the portable electronic apparatus 10a.

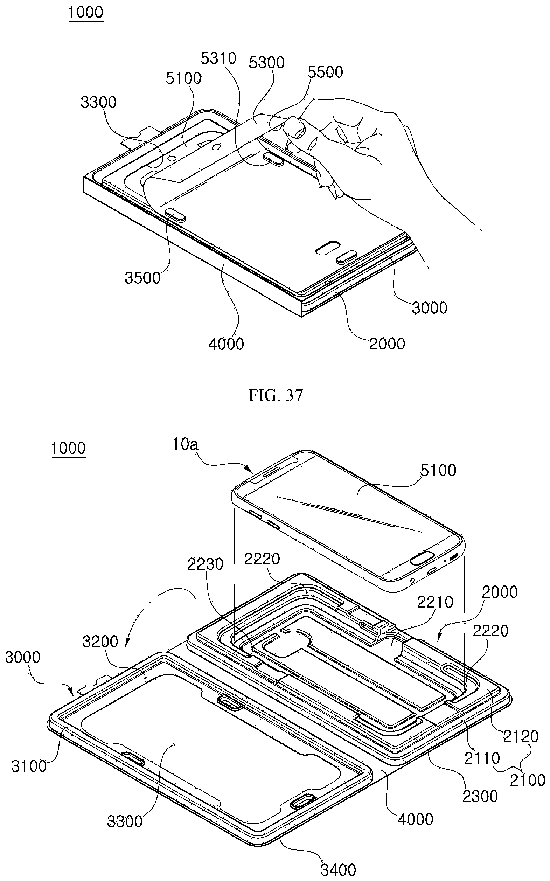

And then, as described in FIG. 36, the second release paper 5300 is removed from the cover 3000. Here, the protective film 5100 is remained on the front display area of the portable electronic apparatus 10a.

And then, as described in FIG. 37, user may insert his finger into the first gripping groove 2210 to open the cover 3000, and then the portable electronic apparatus 10a with the protective film 5100 is separated from the case 2000, so that attachment process of the protective film 5100 may be finished.

In addition, attachment of another protective film 5100 is necessary, new film member 5000 is attached on the cover 3000 and the above process may be repeated. Here, the locking protrusion 3500 of the cover 3000 is inserted into the locking hole 5310 of the second release paper 5300, so that the film member 5000 may be located in a proper position.

The film member 5000 which is separately provided or purchased may preferably have a third release paper (not shown) attached along edge of the rear surface of the second release paper 5300. When the film member 5000 is attached, the second release paper 5300 is attached along the edge of the through hole 3300 of the cover 3000 with the locking protrusion 3500 being inserted into the locking hole 5310 after the third release paper is removed.

According to the protective film attaching apparatus of the present invention, the protective film is received in the second receiving groove or the through hole, and the portable electronic apparatus is received in the first receiving groove, so that miss-alignment of the protective film due to movement may be prevented, and the protective film may be quickly attached on a correct position with our bubbles.

In the foregoing, the present invention has been described in detail based on the embodiments and the accompanying drawings. The foregoing is illustrative of the inventive concept and is not to be construed as limiting thereof. The inventive concept is defined by the following claims, with equivalents of the claims to be included therein.

### Industrial Applicability

According to the protective film attaching apparatus of the present invention, rather than general public is also a trained technician can easily attach the protective film on the front display area of the portable electronic apparatus.

In addition, according to the protective film attaching apparatus, the protective film may be attached on a correct position with our bubbles, so that cost and time may be saved due to repurchase and rework when the attachment is failed.

## Claims

1. A protective film attaching apparatus, comprising:
a case having a first receiving groove configured to receive a rear surface of a portable electronic apparatus;
a cover having a second receiving groove configured to receive a front surface of the portable electronic apparatus, and formed at a side of the case configured to rotate for opening or closing the case, the second receiving groove being corresponding to the fist receiving groove; and
a film member provided in the second receiving groove,
wherein the cover has a first extending groove formed from an upper edge of the cover to an upper portion of the second receiving groove, a second extending groove formed from a lower edge of the cover to a lower portion of the second receiving groove, and a folding line which is formed from the first extending groove to the second extending groove through the second receiving groove.

2. A protective film attaching apparatus, comprising:
a case having a first receiving groove configured to receive a rear surface of a portable electronic apparatus;
a cover configured to rotate at a side of the case to open and close the case, and having a second receiving groove corresponding to the first receiving groove to receive a front surface of the portable electronic apparatus; and
a film member provided in the second receiving groove,
wherein a through hole is formed through a bottom surface of the second receiving groove, a pair of adhesive tape to support the film member is attached on the both side of the through hole, respectively,
the cover comprises a stepped portion formed at both side of the through hole in a width direction, and boundary of the film member is received in the second receiving groove with spaced apart from the stepped portion by a predetermined gap.

3. The protective film attaching apparatus of claim 2, wherein the film member comprises a protective film and a first release paper attached on a front surface of the protective film,
the first release paper is removed from the protective film when the adhesive tape is removed.

4. The protective film attaching apparatus of claim 1, further comprising a body received in the second receiving groove and having a shape corresponding to the second receiving groove, and a guide jig for attaching the adhesive tape,
wherein the guide jig has wing portions protruded from both ends of the body in a width direction to supports the stepped portion.

5. The protective film attaching apparatus of claim 1, wherein the film member comprises a protective film received in the second receiving groove, a first release paper attached on a front surface of the protective film, and a second release paper attached on a rear surface of the protective film.

6. The protective film attaching apparatus of claim 1, further comprising at least one or more of guide protrusion and guide groove for guiding a combination direction, the guide protrusion and guide groove being formed at facing surfaces of the case and the cover, respectively.

7. The protective film attaching apparatus of claim 6, wherein the film member comprises a first grip tape attached on an upper side portion of the first release paper and a second grip tape attached on an upper side portion of the second release paper,
the first grip tape is protruded from the first release paper, the second grip tape is protruded from the second release paper.

8. A protective film attaching apparatus, comprising:
a case having a first groove configured to receive a rear surface of a portable electronic apparatus;
a cover having a second receiving groove configured to receive a front surface of the portable electronic apparatus, and formed at a side of the case configured to rotate for opening or closing the case, the second receiving groove being corresponding to the fist receiving groove ; and
a film member provided in the second receiving groove,
wherein the film member comprises a first protective film received in the second receiving groove, a first release paper attached on a front surface of the first protective film, a second release paper attached on a rear surface of the first protective film and a first grip tape,
an end of the first grip tape is attached on an upper side of the first release paper, and another end of the first grip tape is protruded upward from the first release paper,
an end of the second grip tape is attached on an upper side of the second release paper, and another end of the second grip tape is protruded upward from the second release paper,
a grip tape receiving groove is formed at an upper side of the second receiving groove.

9. A protective film attaching apparatus, comprising:
a case having a receiving groove configured to receive a rear surface of a portable electronic apparatus;
a cover having a through hole corresponding to the receiving groove, and formed at a side of the case configured to rotate for opening or closing the case;
a film member facing the front surface of the portable electronic apparatus through the through hole, a boundary of the film member being attached along a boundary of the through hole; and
a stepped portion formed along the boundary of the through hole on a front surface of the cover,
wherein the film member is attached along the stepped portion.

10. The protective film attaching apparatus of claim 9, wherein the film member comprises a first release paper, a protective film attached on a surface of the first release paper, and a second release paper attached on a surface of the protective film,
a boundary of the first release paper is attached along the along the stepped portion.

11. A protective film attaching apparatus, comprising:
a case having a first receiving groove configured to receive a rear surface of a portable electronic apparatus;
a cover formed at a side of the case configured to rotate for opening or closing the case; and
a film member provided at the cover configured to face the portable electronic apparatus,
wherein the case has a protrusion part formed inner side of the case, and the first receiving groove is depressed on the protrusion part.

12. The protective film attaching apparatus of claim 11, wherein the protrusion part comprises a first protrusion part and a second protrusion part which form a stepped portion.

13. The protective film attaching apparatus of claim 12, wherein the second protrusion comprises a second receiving groove to receive the second protrusion part formed inner side of the cover,
the second protrusion part is inserted into the second receiving groove when the case is combined with the cover.

14. The protective film attaching apparatus of claim 13, wherein the case has a first gripping groove formed at a side of the protrusion part.

15. The protective film attaching apparatus of claim 13, wherein the cover has a through hole formed at a bottom surface of the second receiving groove.

16. The protective film attaching apparatus of claim 15, wherein the film member comprises a protective film received in the through hole, a first release paper attached on a rear surface of the protective film, and a second release paper attached on a front surface of the protective film and on a boundary of the through hole.

17. The protective film attaching apparatus of claim 16, wherein the first release paper comprises a first-first release paper attached on an upper portion of the protective film, and a first-second release paper attached on the other portion of the protective film.

18. The protective film attaching apparatus of claim 16, wherein the second release paper comprises at least one or more of locking hole formed along a boundary of the second release paper, and
at least one or more of locking protrusion corresponding to the locking hole is formed on a front surface of the cover configured to be combined with the locking hole.

19. The protective film attaching apparatus of claim 16, wherein the film member further comprises grip tapes attached on each of the first release paper and the second release paper.

20. A protective film attaching apparatus, comprising:
a case having a first groove configured to receive a rear surface of a portable electronic apparatus;
a cover having a second receiving groove configured to receive a front surface of the portable electronic apparatus, and formed at a side of the case configured to rotate for opening or closing the case, the second receiving groove being corresponding to the fist receiving groove;
a film member provided in the second receiving groove; and
an incision portion having predetermined width and length from an upper edge of the cover to the second receiving groove configured to expose an upper portion of the film member when the case is combined with the cover.
